# EUROPEAN PATENT SPECIFICATION

(11) **EP 2 065 010 B1**
(45) Date of publication and mention of the grant of the patent: **02.06.2010**
(21) Application number: 08169008.3
(22) Date of filing: 13.11.2008
(51) Int. Cl.: A61C 7/14

(54) **Orthodontic appliance**
Orthodontische Einrichtung
Appareil orthodontique

(30) Priority: 28.11.2007 CN 200710114988; 11.01.2008 CN 200810002164
(43) Date of publication of application: 03.06.2009
(73) Proprietor: Song, Zhichun, Qingdao Shandong 266061 (CN)
(72) Inventor: Song, Zhichun, Qingdao Shandong 266061 (CN)
(74) Representative: Savolainen, Seppo Kalevi

(56) References cited:
- WO-A-03/045266
- US-A- 4 353 692
- US-A- 4 531 911

## Description

### TECHNICAL FIELD

The invention relates to an orthodontic appliance for producing tooth movement, and more particularly to an orthodontic appliance coacting with an archwire for producing mesiodistal tooth movement through tooth tipping and uprighting movements.

### BACKGROUND OF THE INVENTION

The Edgewise and the Begg techniques are currently the most common ones in use. Although all forms of Edgewise technique use Edgewise brackets with horizontally extending archwire slots, the most popular form is known as the straight wire technique. Limited free tipping action with Edgewise brackets occurs only when an archwire smaller than the archwire slot is employed, resulting in a loose fit between the archwire and the slot. In contrast, the bracket configuration for the Begg technique utilizes a vertically extending slot, which permits greater free tipping of teeth than the Edgewise brackets.

Moving teeth mesiodistally to close a space between two teeth is a common practice in an orthodontic clinic. The Edgewise technique uses the bodily movement of teeth to close a space, while Begg and Tip-edge technique use tipping the clinical crowns towards the open area followed by an uprighting the roots to their predetermined inclination. It is well known that the forces needed, discomfort, and time required for closing spaces by tipping and uprighting movements are much less than that required for bodily moving the teeth.

In the uprighting movement with Begg and Tip-edge technique, the uprighting springs or auxiliary archwires are needed to move the root to the right position. These two procedures are inconvenient and complicated so that they are not widely practiced in the clinic.

US patent No. 4877398 published on October 31, 1989 discloses an orthodontic bracket which can tip tooth mesiodistally using small force without employing extraoral anchorage and implant anchorage to improve anchorage, and allow to open anterior overbite quickly and effectively. However, it is cumbersome and difficult to upright a tooth root mesiodistally because this technique requires an uprighting spring to upright the inclined teeth during the final stage of the treatment.
Document WO 03045266 discloses an orthodontic appliance according to the preamble of claim 1.

### SUMMARY OF THE INVENTION

The technical problem to be solved by the present invention is to design an orthodontic appliance which can move teeth mesiodistally by using small force without employing extraoral anchorage or implant anchorage to strengthen the anchorage and can upright the teeth easily without employing additional uprighting springs and auxiliary archwires.

For solving the above problem, the present invention provides an orthodontic appliance as specified in claim 1. The orthodontic appliance has a base connected to the crown of a tooth and coacts with an archwire passing through the appliance mesiodistally. The appliance has at least one archwire slot extending through the appliance mesiodistally. The archwire slot has a bottom wall and sidewalls which include an occlusal sidewall and a gingival sidewall being parallel to each other. The archwire slot has at least one sub-slot which is located in the sidewalls of the archwire slot and opens to the archwire slot. At least one end of the sub-slot starts from the mesial edge or the distal edge of the sidewalls of the archwire slot. The buccolingual width of the sub-slot is at least in some section smaller than that of a rectangular archwire employed for uprighting teeth, and the configuration of the sub-slot is adapted to allow a round archwire to enter the sub-slot when the tooth is tipped.

In this document the term "buccolingual" refers to "labiolingual or buccolingual", and the term "buccal side" refers to "buccal side or labial side".

The orthodontic appliance of this invention is a combination of Begg technique and Edgewise technique. Tipping tooth movement and bodily tooth movement both can be achieved by using the orthodontic appliance with different archwires. This orthodontic appliance is easily constructed and is convenient to use.

According to the orthodontic appliance of the present invention, the largest mesiodistal inclination of the tooth is limited by the buccolingual width and the occlusogingival depth of the sub-slot as well as the shape and size of the archwire employed in the appliance.

According to the orthodontic appliance of the present invention, the sub-slot fits the round wire very well when a tooth is tipped.

According to the orthodontic appliance of the present invention, the buccolingual width of the sub-slot is smaller than that of the rectangular archwire for uprighting teeth so that the rectangular wire can not enter into the sub-slot when uprighting a tooth.

According to the orthodontic appliance of the present invention, the archwire is generally parallel to the occlusal plane.

According to the orthodontic appliance of the present invention, the arch wire slot extends horizontally.

According to the orthodontic appliance of the present invention, the orthodontic appliance may be used as a labial orthodontic appliance or a lingual orthodontic appliance.

According to the orthodontic appliance of the present invention, the appliance may have a limiting member for limiting the archwire in the archwire slot. The limiting member may be a ligation device, a self-locking device, or a cover of the archwire slot. Alternatively, the ligation device and the cover can be used together as the limiting member.

According to the orthodontic appliance of the present invention, the appliance may have a ligation device, and the ligation device may have one pair of tie wings or two pairs of tie wings or three pairs of tie wings.

According to the orthodontic appliance of the present invention, the sidewall is formed on the buccal side and the lingual side of at least part of the sub-slot.

According to the orthodontic appliance of the present invention, the sidewall is formed on the buccal side and the lingual side of the sub-slot.

According to the orthodontic appliance of the present invention, the sub-slot may be next to the bottom wall only at the mesial edge and the distal edge of the sidewalls.

According to the orthodontic appliance of the present invention, at least part of the sub-slot is separated from the bottom wall by the sidewall.

According to the orthodontic appliance of the present invention, the sub-slot is separated from the bottom wall by the sidewall.

According to the orthodontic appliance of the present invention, the median line of the section on the sidewall plane of the sub-slot is substantially parallel to the bottom wall, wherein the distance between the median line and the bottom wall is equal to or a little larger than the radius of the round wire employed for tipping teeth.

According to the orthodontic appliance of the present invention, the median plane of the sub-slot divides the sub-slot which is bilaterally symmetrical into labial and lingual halves, wherein the median plane is parallel to the bottom wall.

According to the orthodontic appliance of the present invention, at least most of the sub-slot is bilaterally symmetrical, and a plane which is parallel to the bottom wall divides the symmetrical part of the sub-slot into labial and lingual halves.

According to the orthodontic appliance of the present invention, the median plane of the sub-slot is substantially perpendicular to the occlusal plane.

According to the orthodontic appliance of the present invention, the diameter of the round wire for tipping teeth usually is 0,41mm (0.016 inch) or 0,46mm (0.018 inch), the diameter of a round wire for tooth aligning usually is 0,3mm (0.012 inch) or 0,36mm (0.014 inch), and the type of the rectangular wire for uprighting teeth usually is 0,48mm x 0,64mm (0.019 inch *0.025 inch) or 0,43 mm x 0,64mm (0.017 inch * 0.025 inch).

According to the orthodontic appliance of the present invention, the distance between the median plane of the sub-slot and the bottom wall is substantially equal to the radius of the round wire employed for tipping teeth.

According to the orthodontic appliance of the present invention, the sidewall between the sub-slot and the bottom wall may hinder the thin round wire to enter the sub-slot especially under tight ligation.

According to the orthodontic appliance of the present invention, the sidewall between the sub-slot and the bottom wall has the smallest buccolingual width at the mesial edge and the distal edge of the sidewalls and gradually become wider mesiodistally, and has the largest buccolingual width in the middle of the sidewall.

According to the orthodontic appliance of the present invention, the sidewall between the sub-slot and the bottom wall is very helpful for uprighting and torquing teeth when employing a rectangular wire, and may hinder the rectangular wire to enter the sub-slot.

According to the orthodontic appliance of the present invention, the buccolingual width of the sub-slot may vary from zero to the width larger than the diameter of the round wire employed for tipping teeth, and the round wire may partially enter the sub-slot of which the buccolingual width is smaller than the diameter of the round wire, but the rectangular wire can not enter the sub-slot of which the buccolingual width is smaller than that of the rectangular wire.

According to the orthodontic appliance of the present invention, the diameter of the round wire employed for tipping teeth is larger than that of the round wire employed for aligning teeth, and the diameter of the round wire employed for tipping teeth is smaller than the buccolingual width of the rectangular wire.

According to the orthodontic appliance of the present invention, the sub-slot may have the largest occlusogingival depth at the mesial edge and the distal edge of the sidewalls and gradually become shallower mesiodistally.

According to the orthodontic appliance of the present invention, the orthodontic appliance may be a self-ligation orthodontic appliance, or may be an Edgewise orthodontic appliance or a straight-wire orthodontic appliance. This invention may also be used in combination with any other kinds of general orthodontic appliances.

According to the orthodontic appliance of the present invention, the orthodontic appliance may be made of metal, ceramic or plastic etc., or may be made of any combination of the material mentioned above, or may be made of any other machinable maternal.

According to the orthodontic appliance of the present invention, the orthodontic appliance may be connected to an anterior tooth, a bicuspid or a molar, and the orthodontic appliance may be a bracket or a molar tube.

According to the orthodontic appliance of the present invention, the archwire slot may be a slot or a tube.

According to the orthodontic appliance of the present invention, the sub-slot extends mesiodistally.

According to the orthodontic appliance of the present invention, the sub-slot may extend through the sidewalls mesiodistally up to the distal edge or the mesial edge on the other side of the sidewalls, or may also extend mesiodistally and terminate in the sidewalls.

According to the orthodontic appliance of the present invention, the sub-slot extends occlusogingivally.

According to the orthodontic appliance of the present invention, the sub-slot may extend through the sidewalls occlusogingivally, or may extend occlusogingivally and terminate in the sidewalls.

According to the orthodontic appliance of the present invention, the sub-slot may be located on a continuous sidewall or a discrete sidewall of the archwire slot.

According to the orthodontic appliance of the present invention, when the sub-slot is located in a discrete sidewall, one end of the sub-slot may start from the mesial edge of the mesial section of the sidewall or the distal edge of the distal section of the sidewall.

According to the orthodontic appliance of the present invention, the bottom wall of the archwire slot may extend beyond the archwire slot mesially and/or distally.

According to the orthodontic appliance of the present invention, the sub-slot may have the largest buccolingual width at the mesial edge and the distal edge of the sidewalls of the archwire slot and gradually become narrower mesiodistally.

According to the orthodontic appliance of the present invention, the shape of the cross section perpendicular to the mesiodistal direction of the sub-slot may be triangular, arc, trapezoidal or rectangular.

According to the orthodontic appliance of the present invention, the cross sections perpendicular to the mesiodistal direction of the same sub-slot in the different site may be identical or may be different.

According to the orthodontic appliance of the present invention, the sidewalls are perpendicular to the bottom wall.

According to the orthodontic appliance of the present invention, there may be following configurations relating to the position and the number of the sub-slots.
1. At least one sub-slot starts from the distal edge of the occlusal sidewall of the archwire slot;
2. At least one sub-slot starts from the mesial edge of the gingival sidewall of the archwire slot;
3. At least one sub-slot starts from the mesial edge of the occlusal sidewall of the archwire slot;
4. At least one sub-slot starts from the distal edge of the gingival sidewall of the archwire slot;
5. Any combination of two or more than two above-mentioned configurations;
6. The appliance with the sub-slot is only located on certain teeth or tooth.

During treatment, a round archwire within the archwire slots of brackets enters the sub-slots when teeth are tipped, so that a small anchorage is needed for moving the teeth. In this case, if a conventional molar tube is located on the molar of the same dental arch, the molar functioned as a sturdy anchorage in its bodily movement is steady enough to retract the anterior teeth without utilizing extraoral anchorage or implant anchorage. When a rectangular archwire is employed, the rectangular archwire cannot enter into the sub-slots, so that the teeth are uprighted and torqued. When a thin round archwire is employed under tight ligation, the thin round archwire hindered by the sidewall between the sub-slot and the bottom wall cannot enter the sub-slot sufficiently so that the teeth are aligned. Whether the dental archwire can enter into the sub-slots of the sidewalls or not may be influenced by the following factors:(1) the position and the shape of the sub-slot of the sidewall of an archwire slot, (2) the shape of the archwire slot, (3) ligation manners, and (4) the shape and the size of the dental archwires in the archwire slot. The largest mesiodistal inclination of a tooth is controlled by the width and the depth of the sub-slot as well as the shape and size of the dental archwire used in the bracket.

Another situation is that during treatment a round archwire gradually enters into the sub-slot of the molar tube when a molar is tipped, at this time a small anchorage is needed for moving the molar; when a rectangular archwire is utilized, the rectangular archwire can not enter into the sub-slot of the molar tube on an inclined molar, so that the molar is uprighted and torqued.

With employing the design of the sub-slot, the room for a round wire in the archwire slots is greatly improved and it is beneficial for tipping a tooth, opening deep bite and moving a tooth under a light force without using implant anchorage or extraoral anchorage. Because the rectangular wire cannot enter into the sub-slot, the tooth is uprighted by employing the rectangular wire. So by employing different archwires in the same archwire slot the tooth generates different kinds of movements. Furthermore, comparing to traditional orthodontic appliance for tipping movement, the structure of this orthodontic appliance is simple and the operation is easy. The operation for teeth uprighting is complicated and inconvenient when employing a traditional orthodontic appliance, such as Begg or Tip-Edge appliance, because an uprighting spring and/or auxiliary archwires are required to achieve the purpose.

### BRIEF DESCRIPTION OF THE DRAWINGS

The present invention will be further explained in detail with reference to the accompanying drawings and the description below, in the drawings:
Figure 1 is a front view of the structure of an orthodontic appliance according to the first embodiment of the present invention;
Figure 2 is a right view of the structure of the orthodontic appliance according to the first embodiment of the present invention;
Figure 3 is a top view of the structure of the orthodontic appliance according to the first embodiment of the present invention;
Figure 4 is a sectional view of the structure of the orthodontic appliance according to the first embodiment of the present invention, taken along line A-A of Figure 1;
Figure 5 is a perspective view of the structure of the orthodontic appliance according to the first embodiment of the present invention;
Figure 6 is a front view of the structure of an orthodontic appliance according to the second embodiment of the present invention;
Figure 7 is a left view of the structure of the orthodontic appliance according to the second embodiment of the present invention;
Figure 8 is a top view of the structure of the orthodontic appliance according to the second embodiment of the present invention;
Figure 9 is a sectional view of the structure of the orthodontic appliance according to the second embodiment of the present invention, taken along line A-A of Figure 6;
Figure 10 is a perspective view of the structure of the orthodontic appliance according to the second embodiment of the present invention;
Figure 11 is a front view of the orthodontic appliances of the present invention employing a thick round archwire for tipping teeth;
Figure 12 is a right view of the bracket of the present invention employing the thick round archwire for tipping teeth;
Figure 13 is a partial enlarged view of Figure 11;
Figure 14 is a front view of the orthodontic appliances of the present invention employing a thin round archwire for tooth aligning;
Figure 15 is a right view of the bracket of the present invention employing the thin round archwire for tooth aligning;
Figure 16 is a partial enlarged view of Figure 14;
Figure 17 is a front view of the orthodontic appliances of the present invention employing a rectangular archwire for uprighting teeth;
Figure 18 is a right view of the bracket of the present invention employing the rectangular archwire for uprighting teeth;
Figure 19 is a partial enlarged view of Figure 17;
Figure 20 is a front view of the structure of an orthodontic appliance according to the third embodiment of the present invention;
Figure 21 is a right view of the structure of the orthodontic appliance according to the third embodiment of the present invention;
Figure 22 is a top view of the structure of the orthodontic appliance according to the third embodiment of the present invention;
Figure 23 is a sectional view of the structure of the orthodontic appliance according to the third embodiment of the present invention, taken along line A-A of Figure 20;
Figure 24 is a front view of the structure of an orthodontic appliance according to the fourth embodiment of the present invention;
Figure 25 is a right view of the structure of the orthodontic appliance according to the fourth embodiment of the present invention;
Figure 26 is a top view of the structure of the orthodontic appliance according to the fourth embodiment of the present invention;
Figure 27 is a sectional view of the structure of the orthodontic appliance according to the fourth embodiment of the present invention, taken along line A-A of Figure 24;
Figure 28 is a front view of the structure of an orthodontic appliance according to the fifth embodiment of the present invention;
Figure 29 is a right view of the structure of the orthodontic appliance according to the fifth embodiment of the present invention;
Figure 30 is a top view of the structure of the orthodontic appliance according to the fifth embodiment of the present invention;
Figure 31 is a sectional view of the structure of the orthodontic appliance according to the fifth embodiment of the present invention, taken along line A-A of Figure 28;
Figure 32 is a front view of the section on the sidewall plane of the orthodontic appliance according to the fifth embodiment of the present invention.

### List of Reference Signs:

1. Bracket body
2. Bracket base
3. Archwire slot of the bracket
4. Occlusal sidewall of the archwire slot of the bracket
5. Gingival sidewall of the archwire slot of the bracket
6. Bottom wall of the archwire slot of the bracket
7. Sub-slot of the sidewall of the bracket
8. Ligation wire slot
10. The median line of the sub-slot
11. Tie wing of the bracket
12. Mesial edge of the sidewall of the archwire slot of the bracket
13. Distal edge of the sidewall of the archwires slot of the bracket
14. Body of the molar tube
15. Base of the molar tube
16. Archwire slot of the molar tube
17. Top wall of the archwire slot of the molar tube
18. Occlusal sidewall of the archwire slot of the molar tube
19. Gingival sidewall of the archwire slot of the molar tube
20. Bottom wall of the archwire slot of the molar tube
21. Sub-slot of the sidewall of the archwire slot of the molar tube
23. Tie wing of the molar tube
24. Traction hook of the molar tube
25. Mesial edge of the sidewall of the archwire slot of the molar tube
26. Distal edge of the sidewall of the archwire slot of the molar tube
27. Tie wire
28. Thick round archwire
29. Thin round archwire
30. Rectangular archwire
31. The median line of the section of the sub-slot
32. The labial edge of the section of the sub-slot
33. The lingual edge of the section of the sub-slot

### DETAILED DESCRIPTION OF THE PREFERRED EMBODIMENTS

### First Embodiment

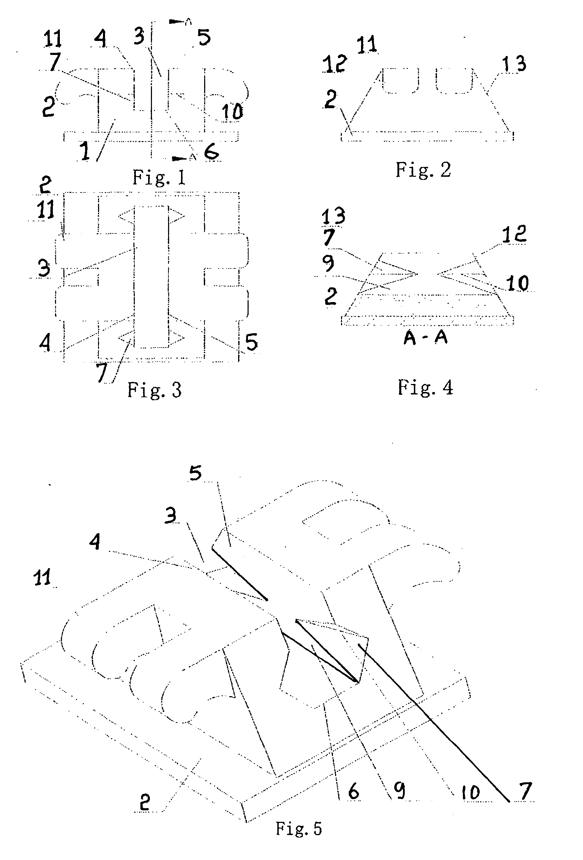

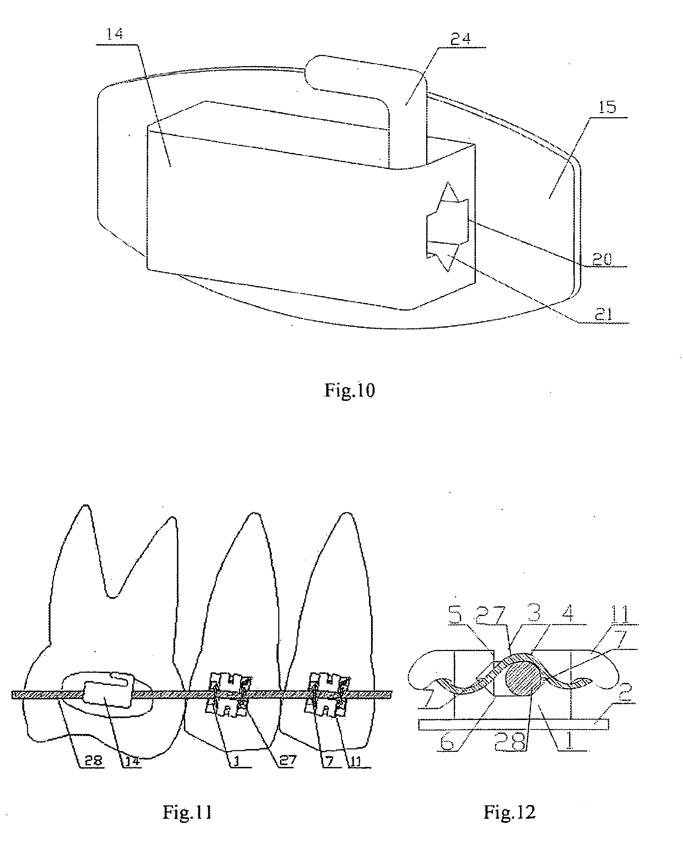

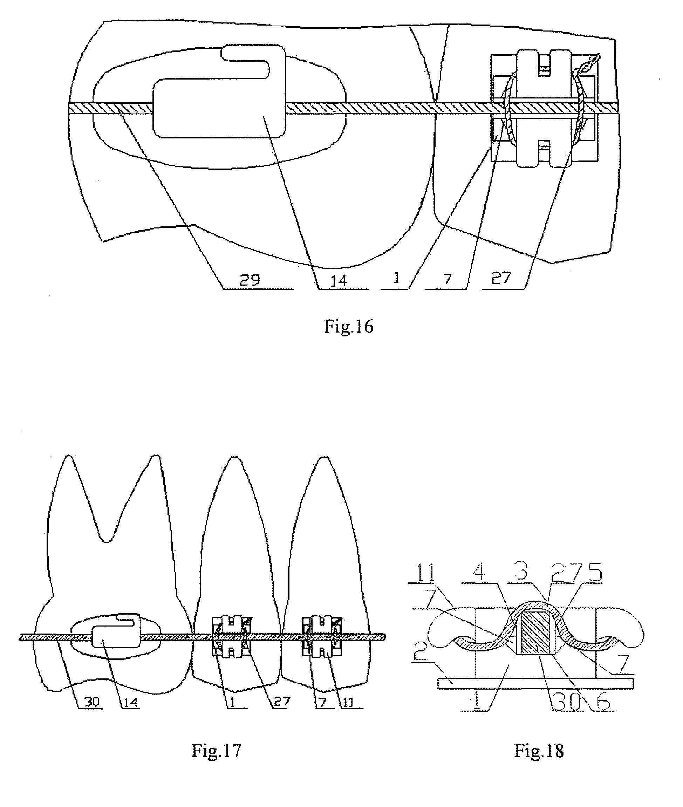

Referring to Fig. 1 through Fig. 5, this orthodontic appliance is a bracket which has a body 1 with an opening through archwire slot 3 extending mesiodistally and horizontally and a base 2 connected to the crown of a tooth. The archwire slot 3 has an occlusal sidewall 4, a gingival sidewall 5 and a bottom wall 6. The occlusal sidewall 4 is parallel to the gingival sidewall 5, and the sidewalls are perpendicular to the bottom wall 6. The sub-slot 7 extending mesiodistally and opening to the archwire slot 3 is located in the sidewalls of the archwire slot 3. There are four sub-slots 7 extending mesiodistally respectively from the mesial edges 12 and the distal edges 13 of the sidewalls of the bracket. The buccolingual width of the sub-slot 7 is smaller than that of the rectangular archwire 30 (see Figs. 17 to 19) employed in the orthodontic appliance. The sub-slot 7 has the largest occlusogingival depth and buccolingual width at the mesial edge and the distal edge of the sidewalls of the archwire slot and becomes gradually shallower and narrower when extending mesiodistally. A round archwire usually enters most deeply into the sub-slot 7 at the mesial edge and the distal edge of the sidewalls when a tooth is tipped and gradually comes out of the sub-slot 7 mesiodistally, so that the configuration of the sub-slot 7 fits the round archwire very well. It is illustrated that the sub-slot 7 has a triangular cross section perpendicular to the mesiodistal direction, the sub-slot 7 consists of two guiding surfaces at a acute angle such as 45° relative to the sidewall, the two guiding surfaces meet at the median line 10 oriented mesiodistally of the sub-slot 7. The median line 10 is parallel to the bottom wall, and the distance between the median line 10 and the bottom wall is a little larger than the radius of the thick round archwire 28 (see Figs. 11 to 13) for tipping teeth in the archwire slot. The median plane of the sub-slot 7 is in the same plane with the median line of the thick round archwire 28, and this plane is parallel to the bottom wall. The sidewall 9 between the sub-slot 7 and the bottom wall 6 has the smallest buccolingual width at the mesial edge and the distal edge of the sidewalls and gradually become wider.

The mesial edge 12 and the distal edge 13 of the sidewalls of the archwire slot intersect with the bottom wall 6 at an angle of about 60°. Tie wings are employed as the ligation device of the bracket. Specifically, two pairs of tie wings 11 are provided on the outside surface of the sidewalls of the archwire slot and project outwardly from the mesial part and the distal part of the sidewalls, respectively.

### Second Embodiment

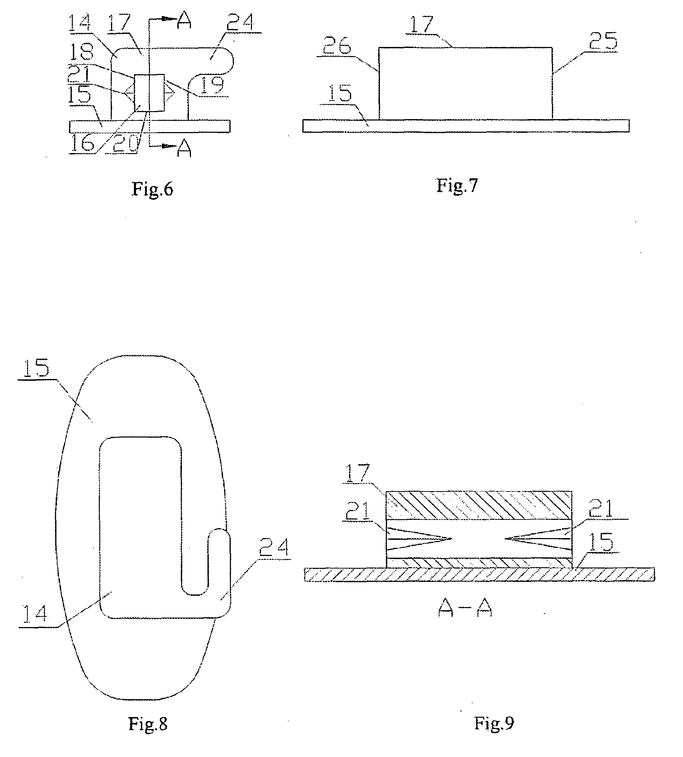

Referring to Fig. 6 through Fig. 10, this orthodontic appliance is a molar tube which has a body 14 with a through archwire slot 16 extending mesiodistally and horizontally and a base 15 connected to the crown of a tooth. The archwire slot 16 has an occlusal sidewall 18, a gingival sidewall 19, a bottom wall 20 and a top wall 17. The occlusal sidewall 18 is parallel to the gingival sidewall 19, and the sidewalls are perpendicular to the bottom wall 20. A traction hook 24 is provided on the outside surface of the gingival sidewall 19 of the archwire slot 16. The sub-slot 21 extending mesiodistally and opening to the archwire slot 16 is located in the sidewalls of the archwire slot 16. There are four sub-slots 21 extending mesiodistally from the mesial edges 25 and the distal edges 26 of the sidewalls respectively. The buccolingual width of the sub-slot 21 of the molar tube is smaller than that of the rectangular archwire 30 (see Figs. 17 to 19) employed in the orthodontic appliance. The sub-slot 21 of the molar tube has the deepest and widest section at the mesial edge 25 or the distal edge 26 of the sidewalls of the archwire slot and becomes gradually shallower and narrower when extending mesiodistally. It is illustrated that the sub-slot 21 has a triangular cross section perpendicular to the mesiodistal direction. The configuration of the sub-slot 21 is similar to that of the sub-slot 7 of the first embodiment. The median plane of the sub-slot 21 is parallel to the bottom wall 20. The mesial edge 25 and the distal edge 26 of the sidewalls are perpendicular to the bottom wall 20.

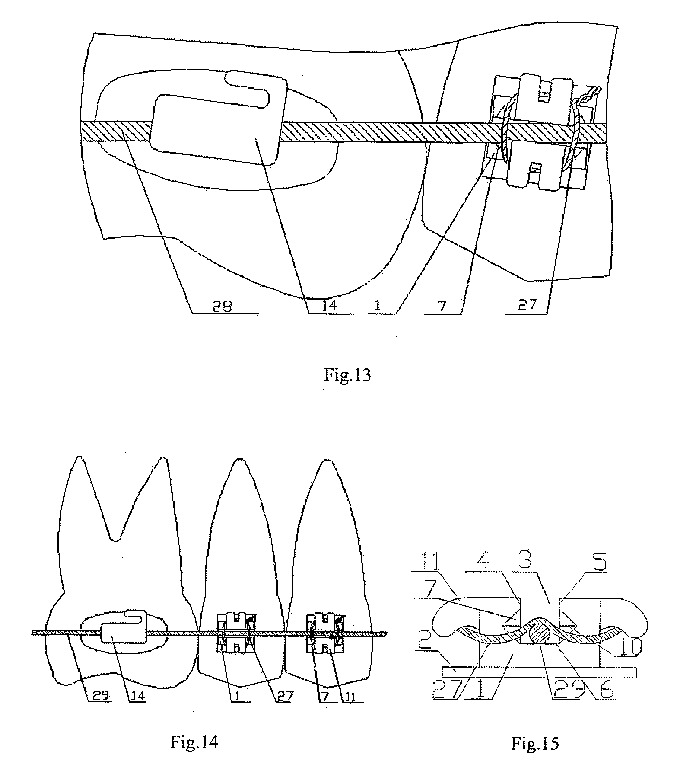

The orthodontic appliances of this invention coact with different archwires to realize different teeth movements, as illustrated in Figs. 11 to 19. The diameter of the thick round wire 28 is larger than that of the thin round wire 29, and the diameter of the thick round wire 28 is smaller than the buccolingual width of the rectangular wire 30. Referring to Figs. 14, 15 and 16, when aligning teeth, the thin round archwire 29 is pushed to the bottom wall 6 of the bracket by a tie wire 27; because it is tied in a tight ligation manner, the thin round archwire 29 hindered by the sidewall 9 between the sub-slot 7 and the bottom wall 6 can not enter into the sub-slot 7 of the bracket sufficiently, this configuration works to align the teeth. Referring to Figs. 11, 12 and 13, when tipping teeth, the thick round archwire 28 is bound in the archwire slot by the tie wire 27, the sub-slot is adapted to allow the thick round archwire 28 to enter the sub-slot so that the thick round archwire 28 can enter into the sub-slot. Referring to Figs. 17, 18 and 19, when uprighting and torquing teeth, the rectangular wire 30 is bound in the archwire slot by the tie wire 27. The rectangular wire 30 can not enter into the sub-slot of the sidewall because the rectangular wire 30 has a larger width in the buccolingual direction than that of the sub-slot. Therefore, the uprighting and torquing movement of teeth occurs.

### Third Embodiment

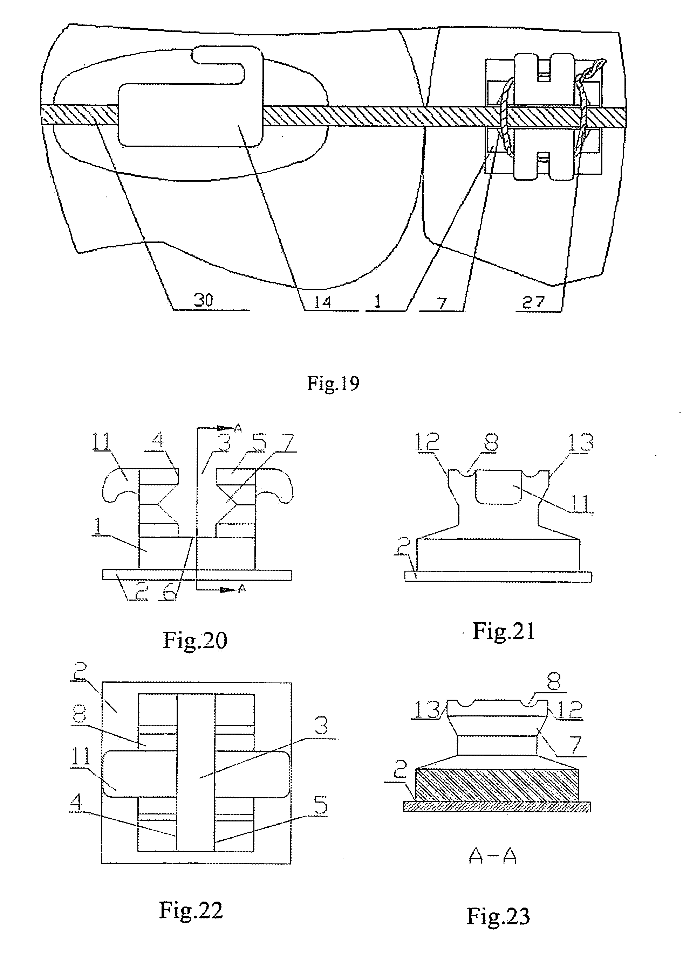

Referring to Fig. 20 through Fig. 23, this orthodontic appliance is a bracket. The bracket of the present embodiment is different from that of the first embodiment in that (1) the mesial edge 12 and the distal edge 13 of the sidewalls of the archwire slot intersect with the bottom wall 6 at an angle of about 15°; (2) a pair of tie wings 11 locate on the outside surface of the sidewalls of the archwire slot; (3) each sidewall of the archwire slot 3 has one sub-slot 7 extending through mesiodistally, and the shape of the cross sections perpendicular to the mesiodistal direction of the sub-slot 7 is triangular and identical.

The median line of the sub-slot 7 is parallel to the bottom wall 6, and the distance between the median line and the bottom wall is a little larger than the radius of the thick round wire, and the sidewalls are formed on the buccal side and the lingual side of the sub-slot 7.

The mesial edge 12 and the distal edge 13 of the sidewalls intersect with the bottom wall 6 at an angle of about 15°. When tipping teeth, the mesial edge 12 and the distal edge 13 of the sidewalls can lead the dental archwire to the sub-slot 7.

### Fourth Embodiment

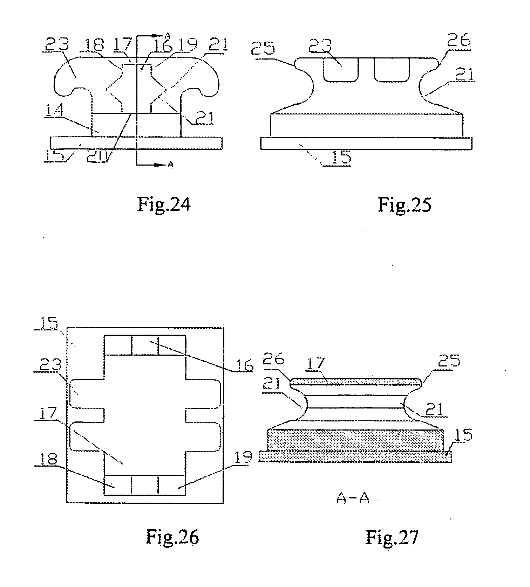

Referring to Fig. 24 through Fig. 27, this orthodontic appliance is a molar tube. The molar tube of the present embodiment is different from that of the second embodiment in that (1) the mesial edge 25 and the distal edge 26 of the sidewalls of the archwire slot 16 intersect with the bottom wall 20 at an angle of about 15°; (2) two pairs of tie wings 23 locate on the outside surface of the sidewalls; (3) each sidewall of the archwire slot 16 has one sub-slot 21 extending through mesiodistally, and the sub-slot 21 extends through each sidewall occlusogingivally at the mesial and the distal edge of the sidewalls.

Without using tie wire the archwire can enter the sub-slot 21 of the sidewall; when employing a tight ligation manner, a tie wire passing by the mesial edge 25 and the distal edge 26 of the sidewalls has great restriction to the thin round archwire so that the archwire can not enter the sub-slot 21, which is beneficial for teeth alignment.

### Fifth Embodiment

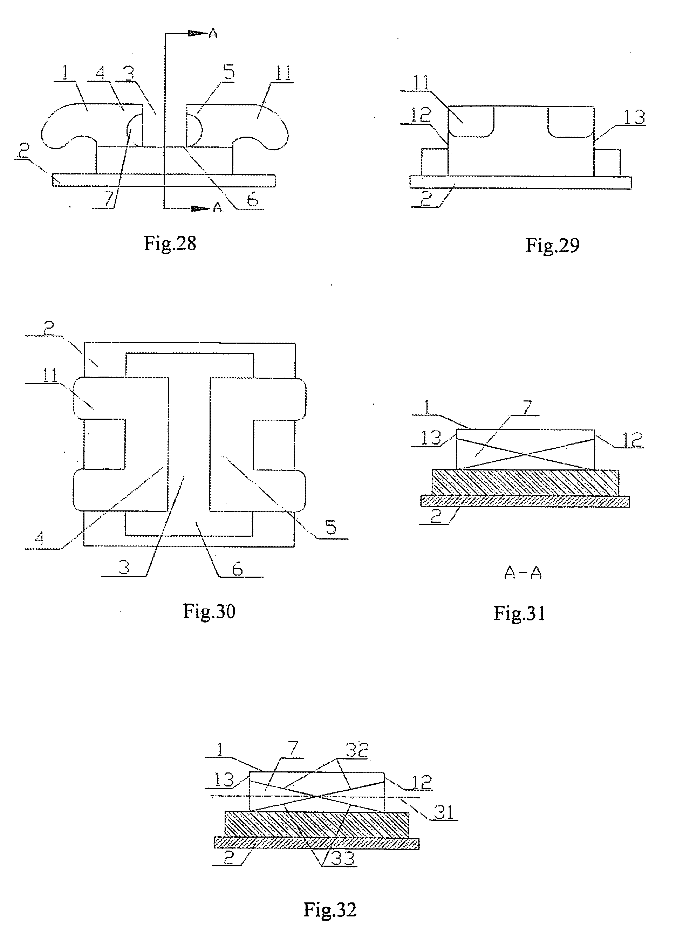

Referring to Fig. 28 through Fig. 31, this orthodontic appliance is a straight-wire bracket. The straight-wire bracket of the present embodiment is different from that of the first embodiment in that (1) the mesial edge 12 and the distal edge 13 of the sidewalls of the archwire slot is perpendicular to the bottom wall 6; (2) the sub-slot 7 has a arc cross section perpendicular to the mesiodistal direction; (3) at the mesial edge and the distal edge of the sidewalls the sub-slot is next to the bottom wall, and the buccolingual width of the sidewall between the sub-slot and the bottom wall is smallest at the mesial edge and the distal edge of the sidewalls and gradually become larger when extending mesiodistally; (4) the bottom wall 6 extends beyond the archwire slot 3 mesiodistally, and the part of the bottom wall out of the archwire slot becomes wider occlusogingivally.

Referring to Fig. 32, the median line 31 of the section on the sidewall plane of the sub-slot is parallel to the bottom wall, and the distance between the median line 31 and the bottom wall 6 is generally equal to the radius of the thick round wire 28, the distance from a point in the median line 31 to the labial edge 32 is equal to that from the point to the lingual edge 33.

## Claims

1. An orthodontic appliance which has a base(2) connectible to the crown of a tooth and coacts with an archwire(28, 29, 30) passing through the appliance mesiodistally, the appliance having at least one archwire slot(3) which extends through the appliance mesiodistally and has a bottom wall(6) and sidewalls(4,5) which include an occlusal sidewall(4) and a gingival sidewall(5) being parallel to each other;
wherein the archwire slot(3) has at least one sub-slot(7) which is located in the sidewalls(4,5) of the archwire slot(3) and opens to the archwire slot(3),
wherein at least one end of the sub-slot(7) starts from the mesial edge(12) or the distal edge(13) of the sidewalls(4,5),
wherein the buccolingual width of the sub-slot(7) is at least in some section smaller than 0.64mm(0.025inch),
wherein the configuration of the sub-slot(7) is adapted to allow a round archwire(28) to enter the sub-slot(7) when the tooth is tipped, **characterized in that**
at least a part of the sub-slot(7) is separated from the bottom wall(6) by a part(9) of the sidewall(4,5), which is located between the sub-slot(7) and the bottom wall(6).

2. The orthodontic appliance of claim 1, wherein the sidewall(4,5) is formed at the buccal side and the lingual side of at least part of the sub-slot(7).

3. The orthodontic appliance of claim 1, wherein the buccolingual width of the sub-slot(7) is smaller than0.64mm(0.025 inch).

4. The orthodontic appliance of claim 1, wherein the depth of the sub-slot(7) may extend through the sidewalls(4,5) occlusogingivally, or may extend occlusogingivally and terminate in the sidewalls(4,5).

5. The orthodontic appliance of claim 1, wherein the sub-slot(7) may extend through the sidewalls(4,5) mesiodistally, or may extend mesiodistally and terminate in the sidewalls(4,5).

6. The orthodontic appliance of claim 1, wherein the sub-slot(7) has the largest buccolingual width at the mesial edge(12) and the distal edge(13) of the sidewalls(4,5) and gradually becomes narrower when extending mesiodistally.

7. The orthodontic appliance of claim 6, wherein the shape of the cross section perpendicular to the mesiodistal direction of the sub-slot(7) is triangle, and wherein the sub-slot(7) consists of two guiding inclined surfaces at an acute angle relative to the sidewall(4,5), wherein the two guiding inclined surfaces meet at a line(10) considerably parallel to the bottom wall(6).

8. The orthodontic appliance of claim 6, wherein the median line(31 ) of the section on the sidewall plane of the sub-slot(7) is considerably parallel to the bottom wall(6).

9. The orthodontic appliance of claim 8, wherein the distance between the median line(31) and the bottom wall(6) is generally .0.20 or 0.23mm(0.008 or 0.009 inch).

10. The orthodontic appliance of claim 1, wherein the sub-slot(7) has the largest occlusogingival depth at the mesial edge(12) and the distal edge(13) of the sidewalls(4,5) and gradually becomes shallower when extending mesiodistally.

11. The orthodontic appliance of claim 1, wherein the shape of the cross section perpendicular to the mesiodistal direction of the sub-slot(7) may be triangular, arc, trapezoidal or rectangular.

12. The orthodontic appliance of claim 1, wherein the sidewall(4,5) between the sub-slot(7) and the bottom wall(6) has the smallest buccolingual width at the mesial edge(12) and the distal edge(13) of the sidewalls(4,5) and gradually become wider.

13. The orthodontic appliance of claim 1, wherein the sub-slot(7) is separated from the bottom wall(6) by a part (9) of the sidewall(4,5), which is located between the sub-slot(7) and the bottom wall(6).

14. The orthodontic appliance of claim 1, wherein the sub-slot(7) is located in a discrete sidewall(4,5), wherein one end of the sub-slot(7) may start from the mesial edge(12) of the mesial section of the sidewall(4,5) or the distal edge(13) of the distal section of the sidewall(4,5).

## Patentansprüche

1. Kieferorthopädische Vorrichtung, die eine Basis (2) besitzt, die an die Krone eines Zahnes angeschlossen werden kann und mit einem Drahtbogen (28, 29, 30) zusammenwirkt, der mesiodistal durch die Vorrichtung verläuft, wobei die Vorrichtung mindestens einen Drahtbogenschlitz (3) besitzt, der sich mesiodistal durch die Vorrichtung erstreckt, und eine Grundwand (6) und Seitenwände (4, 5) besitzt, die eine okklusale Seitenwand (4) und eine gingivale Seitenwand (5) umfassen, die zueinander parallel sind;
wobei der Drahtbogenschlitz (3) mindestens einen Teilschlitz (7) besitzt, der sich in den Seitenwänden (4, 5) des Drahtbogenschlitzes (3) befindet und sich zum Drahtbogenschlitz (3) öffnet,
wobei mindestens ein Ende des Teilschlitzes (7) vom mesialen Rand (12) oder dem distalen Rand (13) der Seitenwände (4, 5) ausgeht,
wobei die bukkolinguale Breite des Teilschlitzes (7) zumindest abschnittsweise kleiner als 0,64 mm (0,025 Zoll) ist,
wobei die Gestaltung des Teilschlitzes (7) dazu ausgelegt ist, einen Runddrahtbogen (28) in den Teilschlitz (7) eintreten zu lassen, wenn der Zahn geneigt ist,
**dadurch gekennzeichnet, dass**
zumindest ein Teil des Teilschlitzes (7) von der Grundwand (6) durch einen Teil (9) der Seitenwand (4, 5) getrennt ist, der sich zwischen dem Teilschlitz (7) und der Grundwand (6) befindet.

2. Kieferorthopädische Vorrichtung nach Anspruch 1, wobei die Seitenwand (4, 5) auf der bukkalen Seite und der lingualen Seite zumindest eines Teils des Teilschlitzes (7) gebildet ist.

3. Kieferorthopädische Vorrichtung nach Anspruch 1, wobei die bukkolinguale Breite des Teilschlitzes (7) kleiner als 0,64 mm (0,025 Zoll) ist.

4. Kieferorthopädische Vorrichtung nach Anspruch 1, wobei sich die Tiefe des Teilschlitzes (7) okkluso-gingival durch die Seitenwände (4, 5) erstrecken kann, oder sich okkluso-gingival erstrecken und in den Seitenwänden (4, 5) enden kann.

5. Kieferorthopädische Vorrichtung nach Anspruch 1, wobei sich der Teilschlitz (7) mesiodistal durch die Seitenwände (4, 5) erstrecken kann, oder sich mesiodistal erstrecken und in den Seitenwänden (4, 5) enden kann.

6. Kieferorthopädische Vorrichtung nach Anspruch 1, wobei der Teilschlitz (7) am mesialen Rand (12) und distalen Rand (13) der Seitenwände (4, 5) die größte bukkolinguale Breite hat und und in seiner mesiodistalen Erstreckung graduell schmäler wird.

7. Kieferorthopädische Vorrichtung nach Anspruch 6, wobei die Form des Querschnitts senkrecht zur mesiodistalen Richtung des Teilschlitzes (7) dreieckig ist, und wobei der Teilschlitz (7) aus zwei in einem spitzen Winkel in Bezug auf die Seitenwand (4, 5) geneigten Führungsflächen besteht, wobei die beiden geneigten Führungsflächen an einer zur Grundwand (6) im Wesentlichen parallelen Linie (10) aufeinandertreffen.

8. Kieferorthopädische Vorrichtung nach Anspruch 6, wobei die Mittellinie (31) des Abschnitts auf der Seitenwandebene des Teilschlitzes (7) im Wesentlichen parallel zur Grundwand (6) ist.

9. Kieferorthopädische Vorrichtung nach Anspruch 8, wobei der Abstand zwischen der Mittellinie (31) und der Grundwand (6) allgemein 0,20 oder 0,23 mm (0,008 oder 0,009 Zoll) beträgt.

10. Kieferorthopädische Vorrichtung nach Anspruch 1, wobei der Teilschlitz (7) am mesialen Rand (12) und distalen Rand (13) die größte okkluso-gingivale Tiefe hat und in seiner mesiodistalen Erstreckung graduell weniger tief wird.

11. Kieferorthopädische Vorrichtung nach Anspruch 1, wobei die Form des Querschnitts senkrecht zur mesiodistalen Richtung des Teilschlitzes (7) dreieckig, bogenförmig, trapezförmig oder rechteckig sein kann.

12. Kieferorthopädische Vorrichtung nach Anspruch 1, wobei die Seitenwand (4, 5) zwischen dem Teilschlitz (7) und der Grundwand (6) am mesialen Rand (12) und distalen Rand (13) der Seitenwände (4, 5) die kleinste bukkolinguale Breite hat und graduell breiter wird.

13. Kieferorthopädische Vorrichtung nach Anspruch 1, wobei der Teilschlitz (7) durch einen Teil (9) der Seitenwand (4, 5), der sich zwischen dem Teilschlitz (7) und der Grundwand (6) befindet, von der Grundwand (6) getrennt ist.

14. Kieferorthopädische Vorrichtung nach Anspruch 1, wobei sich der Teilschlitz (7) in einer eigenständigen Seitenwand (4, 5) befindet, wobei ein Ende des Teilschlitzes (7) vom mesialen Rand (12) des mesialen Abschnitts der Seitenwand (4, 5) oder vom distalen Rand (13) des distalen Abschnitts der Seitenwand (4, 5) ausgehen kann.

## Revendications

1. Appareil orthodontique qui possède une base (2) pouvant être reliée à la couronne d'une dent et coopérant avec un fil d'arc (28, 29, 30) passant à travers l'appareil de façon mésiodistale, l'appareil ayant au moins une fente de fil d'arc (3) qui s'étend à travers l'appareil de façon mésiodistale et possède une paroi inférieure (6) et des parois latérales (4, 5) qui incluent une paroi latérale occlusale (4) et une paroi latérale gingivale (5) parallèles l'une à l'autre ;
dans lequel la fente de fil d'arc (3) a au moins une fente secondaire (7) qui se trouve dans les parois latérales (4, 5) de la fente de fil d'arc (3) et s'ouvre sur la fente de fil d'arc (3),
dans lequel au moins une extrémité de la fente secondaire (7) part du bord mésial (12) ou du bord distal (13) des parois latérales (4, 5),
dans lequel la largeur buccolinguale de la fente secondaire (7) est au moins dans une certaine section inférieure à 0,64 mm (0,025 pouce),
dans lequel la configuration de la fente secondaire (7) est adaptée pour permettre à un fil d'arc arrondi (28) d'entrer dans la fente secondaire (7) lorsque la dent est inclinée, **caractérisé en ce que**
au moins une partie de la fente secondaire (7) est séparée de la paroi inférieure (6) par une partie (9) de la paroi latérale (4, 5) qui se trouve entre la fente secondaire (7) et la paroi inférieure (6).

2. Appareil orthodontique selon la revendication 1, dans lequel la paroi latérale (4, 5) est formée sur le côté buccal et le côté lingual d'au moins une partie de la fente secondaire (7).

3. Appareil orthodontique selon la revendication 1, dans lequel la largeur buccolinguale de la fente secondaire (7) est inférieure à 0,64 mm (0,025 pouce).

4. Appareil orthodontique selon la revendication 1, dans lequel la profondeur de la fente secondaire (7) peut s'étendre à travers les parois latérales (4, 5) de façon occlusogingivale, ou peut s'étendre de façon occlusogingivale et se terminer dans les parois latérales (4, 5).

5. Appareil orthodontique selon la revendication 1, dans lequel la fente secondaire (7) peut s'étendre à travers les parois latérales (4, 5) de façon mésiodistale, ou peut s'étendre de façon mésiodistale et se terminer dans les parois latérales (4, 5).

6. Appareil orthodontique selon la revendication 1, dans lequel la fente secondaire (7) a la largeur buccolinguale la plus importante sur le bord mésial (12) et le bord distal (13) des parois latérales (4, 5) et se rétrécit progressivement lorsqu'elle s'étend de façon mésiodistale.

7. Appareil orthodontique selon la revendication 6, dans lequel la forme de la section transversale perpendiculaire à la direction mésiodistale de la fente secondaire (7) est triangulaire, et dans lequel la fente secondaire (7) consiste en deux surfaces inclinées de guidage à un angle aigu par rapport à la paroi latérale (4, 5), dans lequel les deux surfaces inclinées de guidage se rencontrent au niveau d'une ligne (10) considérablement parallèle à la paroi inférieure (6).

8. Appareil orthodontique selon la revendication 6, dans lequel la ligne médiane (31) de la section sur le plan de paroi latérale de la fente secondaire (7) est considérablement parallèle à la paroi inférieure (6).

9. Appareil orthodontique selon la revendication 8, dans lequel la distance entre la ligne médiane (31) et la paroi inférieure (6) est généralement de 0,20 ou 0,23 mm (0,008 ou 0,009 pouce).

10. Appareil orthodontique selon la revendication 1, dans lequel la fente secondaire (7) a la profondeur occlusogingivale la plus importante sur le bord mésial (12) et le bord distal (13) des parois latérales (4, 5) et se rétrécit progressivement lorsqu'elle s'étend de façon mésiodistale.

11. Appareil orthodontique selon la revendication 1, dans lequel la forme de la section transversale perpendiculaire à la direction mésiodistale de la fente secondaire (7) peut être triangulaire, arquée, trapézoïdale ou rectangulaire.

12. Appareil orthodontique selon la revendication 1, dans lequel la paroi latérale (4, 5) entre la fente secondaire (7) et la paroi inférieure (6) a la largeur buccolinguale la plus petite sur le bord mésial (12) et le bord distal (13) des parois latérales (4, 5) et s'élargit progressivement.

13. Appareil orthodontique selon la revendication 1, dans lequel la fente secondaire (7) est séparée de la paroi inférieure (6) par une partie (9) de la paroi latérale (4, 5) qui se trouve entre la fente secondaire (7) et la paroi inférieure (6).

14. Appareil orthodontique selon la revendication 1, dans lequel la fente secondaire (7) se trouve dans une paroi latérale discrète (4, 5), dans lequel une extrémité de la fente secondaire (7) part du bord mésial (12) de la section mésiale de la paroi latérale (4, 5) ou du bord distal (13) de la section distale de la paroi latérale (4, 5).
